Europäisches Patentamt

European Patent Office

Office européen des brevets

(19)

(11) Veröffentlichungsnummer: **0 037 433**
**A2**

(12) ## EUROPÄISCHE PATENTANMELDUNG

(21) Anmeldenummer: **80107137.4**

(22) Anmeldetag: **18.11.80**

(51) Int. Cl.³: **F 24 H 3/06**
**F 24 B 7/04**

(30) Priorität: **02.04.80 DE 3012827**

(43) Veröffentlichungstag der Anmeldung:
**14.10.81 Patentblatt 81/41**

(84) Benannte Vertragsstaaten:
**AT BE CH DE FR LI NL SE**

(71) Anmelder: H. u. W. Fritzen GmbH & Co.
Dülmener Strasse 14
D-4420 Coesfeld(DE)

(72) Erfinder: Büchner, Alfred
Erbdrostenweg 15
D-4420 Coesfeld(DE)

(72) Erfinder: Fritzen, Benno
Forellenweg 5
D-4420 Coesfeld(DE)

(74) Vertreter: Habbel, Hans-Georg, Dipl.-Ing.
Postfach 3429 Am Kanonengraben 11
D-4400 Münster(DE)

(54) **Warmluftofen für feste Brennstoffe.**

(57) Die Erfindung schlägt einen Warmluftofen vor, der geeignet ist, mit allen möglichen Feststoffen betrieben zu werden, wobei es auch möglich ist, beispielsweise große Strohballen oder längere Holzstücke in diesem Ofen zu verbrennen. Die Nachverbrennung stellt sicher, daß eine restlose Ausbeute der Energie erfolgt und die Verbrennungsgase möglichst wenig umweltschädlich sind. Bei einer abgewandelten Ausführungsform wird ein sogenannter Durchbrandkessel vorgeschlagen, der durch die besondere Ausbildung der Luftzuführung ebenfalls zu einer großen Energieausbeute führt.

EP 0 037 433 A2

Fig. 1

- 1 -

## Warmluftofen für feste Brennstoffe

Die Erfindung betrifft einen Warmluftofen für feste Brennstoffe mit einem Gebläse zur Erzielung eines Luftstromes, von dem ein Teil als Verbrennungsluft abgezweigt und einer langgestreckt ausgebildeten Brennkammer teilweise im Bereich des Rostes nach oben gerichtet und teilweise im oberen Bereich der Brennkammer zugeführt wird, während der Hauptteil die Brennkammer umfließt und derart erwärmt wird. (AT-PS 152 903).

In der genannten AT-PS 152 903 wird ein Warmluftofen beschrieben, bei welchem die Zuführung der Luft im Bereich des Rostes unterhalb des Rostes über eine sich nur über einen Bruchteil der Rostfläche erstreckende Luftzuführung erfolgt, so daß damit in einem Teil des Rostes eine erhöhte Sauerstoffzuführung erfolgt, während in dem größten Teil des Rostes zu wenig Sauerstoff zugeführt wird. Weiterhin erfolgt die Zuführung der Verbrennungsluft im oberen Bereich der Brennkammer über einen Kanal, der oberhalb der Feuerung mündet, wobei diese zugeführte Luft den Kaminzug verstärken soll, aber nicht die Nachverbrennung einleitet. Um den Kaminzug zu verstärken, ist das Zuführungsrohr nach oben gerichtet in den Brennraum eingeführt und die Luft wird in Form eines Luftstrahles in den bereits nach oben gerichteten Abgasstrom eingeführt und unterstützt diesen, trägt aber überhaupt nicht zur Nachverbrennung bei, denn die erforderliche Vermischung zwischen sauerstoffreicher Luft und Abgase erfolgt nicht.

Der Erfindung liegt die Aufgabe zugrunde, einen Warmluftofen für feste Brennstoffe zu schaffen, dessen Abgase keine Umweltbelastung darstellen, insbesondere kaum feste Partikelchen aufweisen, wobei eine vollständige Verbrennung angestrebt wird und die Öfen vorzugsweise in der Landwirtschaft einsetzbar sind, um bei der Verbrennung von Holzstroh od. dgl. Warmluft zu erzeugen, die der Trocknung von Getreide, Heu und dergleichen dienen kann.

Diese der Erfindung zugrundeliegende Aufgabe wird durch die in den Ansprüchen genannten Maßnahmen gelöst. Insbesondere wird auch dadurch, daß die Beschickung des Brennraumes an der der Luftzuführung abgewandten Seite erfolgt, erreicht, daß die Luftzuführung sich über die ganze Länge der langgestreckten Brennkammer erstrecken muß, und zwar in gewissem Sinn im Gegenstrom, so daß dadurch die zugeführte Verbrennungsluft stark erhitzt wird, da sie bereits an der heißesten Stelle des Ofens, nämlich an der der Beschickungsklappe abgewandten Seite mit dem Ofen in Verbindung kommt. Die Luft weist daher eine Temperatur von 4oo bis 5oo$^{o}$ auf, wodurch die vorteilhafte Nachverbrennung noch verbessert wird und gleichzeitig die normale Verbrennung besser durchgeführt werden kann.

Der Brennraum wird gemäß einem Merkmal der Erfindung so gestaltet, daß die in der Landwirtschaft üblicherweise anfallenden Holzscheite in einer Länge von 1m bis 1,5om problemlos eingeführt werden können. Gleichzeitig ist der Brennraum und die Beschickungsöffnung des Brennraumes so gestaltet, daß hier auch ein Einführen der in der Landwirtschaft anfallenden Strohballen möglich wird.

Ein Ausführungsbeispiel der Erfindung wird nachfolgend anhand der Zeichnungen erläutert.

- 4 -

Die Zeichnungen zeigen dabei in

Fig. 1    einen Schnitt durch eine erste Ausführungsform eines erfindungsgemäßen Ofens von der Seite gesehen, in,

Fig. 2    einen Schnitt durch den Ofen gemäß der Linie 2 - 2 in Fig. 1, in

Fig. 3    einen Schnitt durch eine abgewandelte Ausführungsform des erfindungsgemäßen Ofens, in

Fig. 4    einen Schnitt gemäß der Linie 4 - 4 in Fig. 3 und in

Fig. 5    einen Schnitt in größerem Maßstab zur Verdeutlichung der Verschlußklappe.

In den Zeichnungen ist mit 1 eine Ofentür und mit 2 ein Anschluß für ein Gebläse bezeichnet, wobei ein Außenmantel des Ofens 3 das Bezugszeichen 4 trägt. Bei 5 ist ein Abgaskamin erkennbar und der eigentliche Brennraum trägt das Bezugszeichen 6, wobei ein Brennrost mit 7 bezeichnet ist und aus einzelnen Roststäben 8 besteht, die lose auf entsprechenden Tragstreben 9 gelagert werden, so daß bei Beschädigen eines Roststabes dieser leicht ausgewechselt werden kann.

- 5 -

Die Ofentür schließt über ein umlaufendes U-förmiges Profil 1o, das mit einer entsprechenden Abdichtmasse 11 ausgerüstet ist, an einem umlaufenden Winkel 12 an und bewirkt somit eine ausreichende sichere Abdichtung.

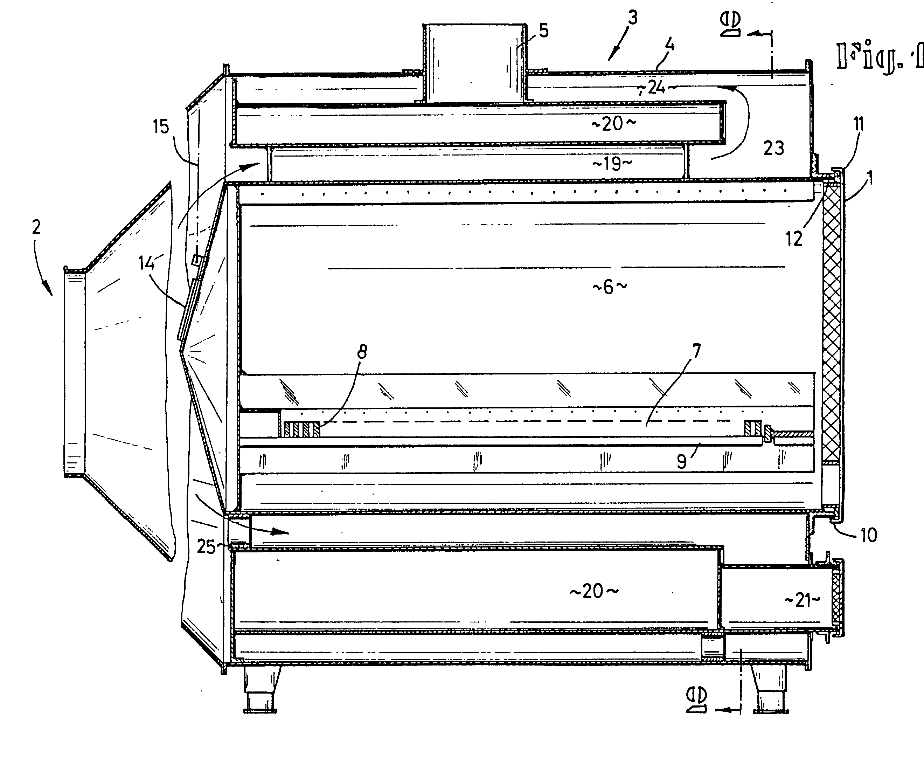

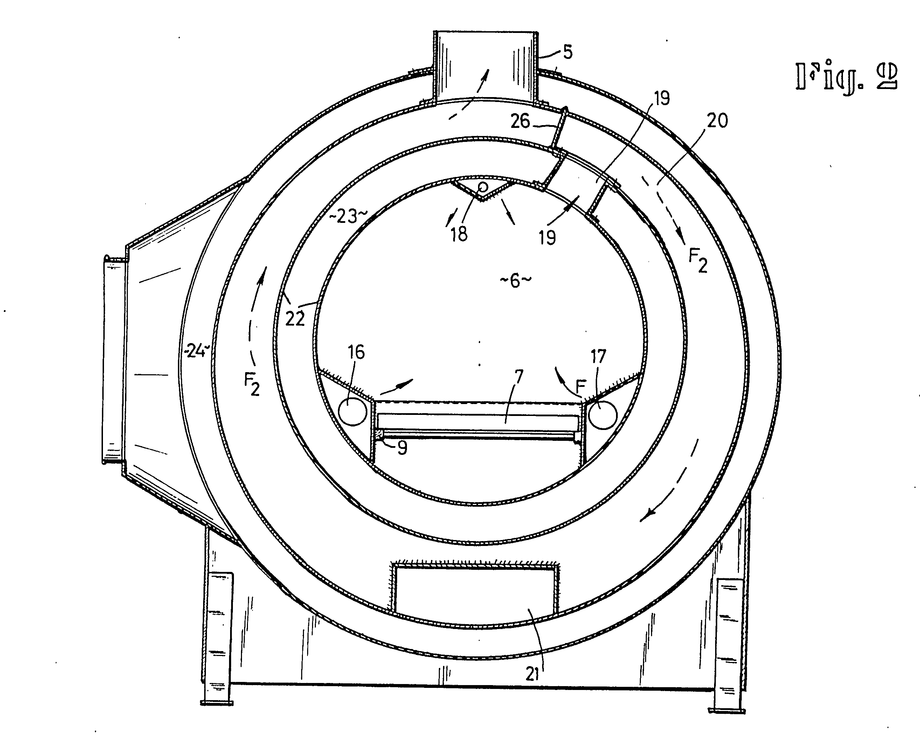

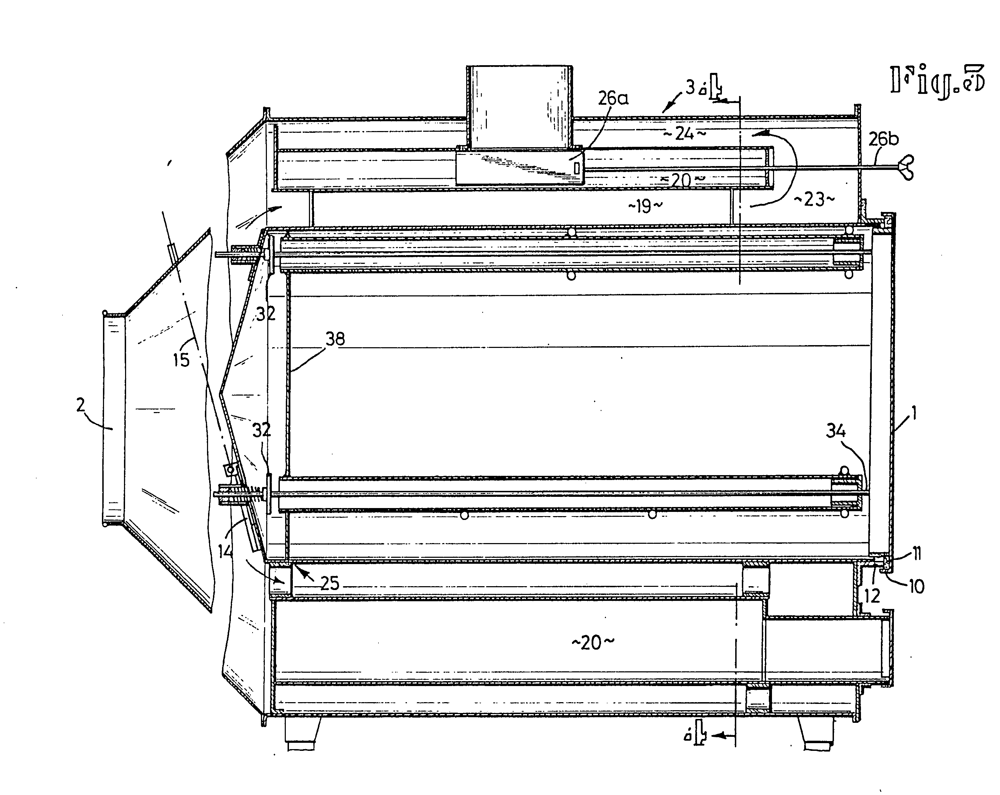

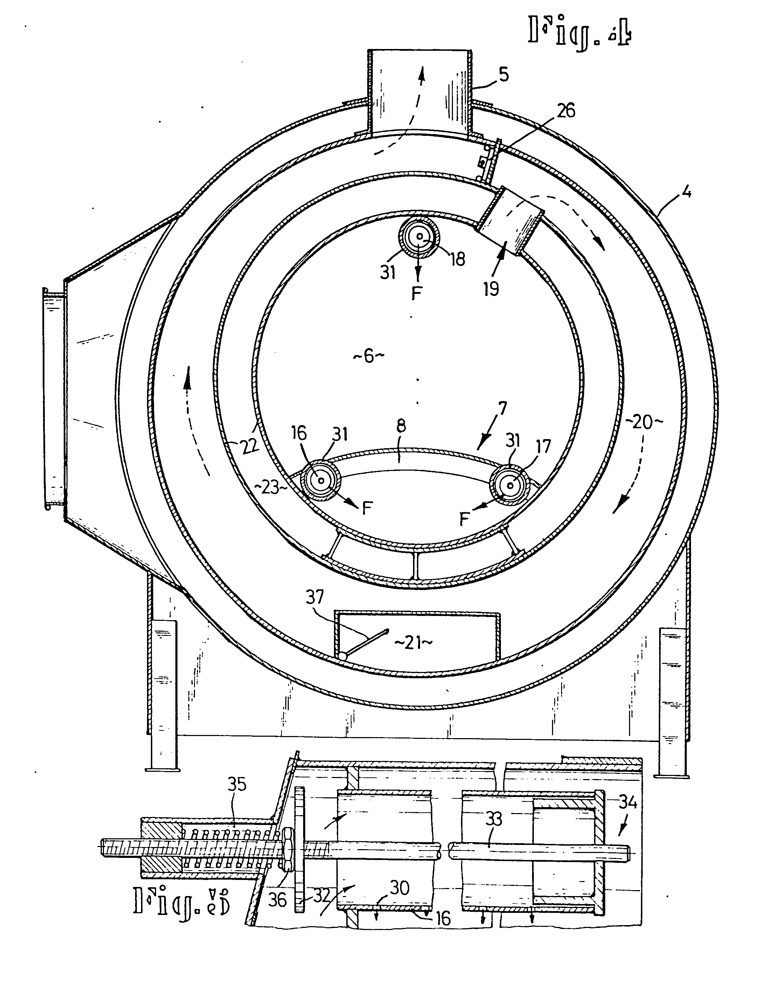

Bei 14 ist in Fig. 1 und 3 eine Luftzufuhrklappe erkennbar, die über einen Seilzug 15 motorisch oder von Hand verstellt werden kann, wobei bei motorischer Verstellung diese Verstellung vorzugsweise thermostatisch derart erfolgt, daß durch entsprechendes mehr oder weniger weites Öffnen der Klappe die erforderliche Verbrennungsluft dem Brennraum zugeführt wird. Der Eintritt der Verbrennungsluft in den Brennraum erfolgt über die in Fig. 2 und Fig. 4 deutlicher erkennbaren Luftleitungen 16, 17 und 18, wobei die Luftleitungen 16 und 17 gemäß Fig. 2 die Zuführung der Luft oberhalb des Brennrostes und gemäß Fig. 4 unterhalb des Brennrostes 7 bewirken, wie dies der eingezeichnete Pfeil F verdeutlicht. Die Zuführung der Luft im oberen Teil über die Luftzuführung 18 erfolgt ebenfalls in Richtung der Pfeile durch entsprechende Eintrittsöffnungen.

Der Luftaustritt wird durch die in Fig. 5 deutlicher erkennbaren Luftaustrittsöffnungen 3o ermöglicht. Die

- 6 -

über die Luftleitung 18 zugeführte Luft bewirkt eine
Nachverbrennung der noch unverbrannten Gase im oberen
Teil des Ofens, wobei ggf. auch eine unterschiedliche
Steuerung der Luftmengen bei den einzelnen Luftzuführungsrohren erfolgen kann.

Die Verbrennungsgase fließen aus dem Brennraum 6 durch
eine Öffnung 19 in den Abgaszug 2o, der - wie dies
die Fig. 2 besonders deutlich zeigt - sich vom Eintritt 19 aus vergrößert, so daß im unteren Bereich
die angedeutete Entleerungseinrichtung 21 für sich
hier ablagernde Feststoffpartikelchen angeordnet
werden kann. Durch die Anordnung eines in seiner Neigung einstellbaren Fanggitters 37 (Fig. 4) kann die
Ablagerung der Feststoffpartikelchen noch verbessert
werden. Von dieser Einrichtung 21 aus verjüngt sich
der Abgaskanal 2o wieder, so daß die Abgasgeschwindigkeit wieder erhöht wird, bevor sie zum Abgaskamin 5
gelangt.

Fig. 1 und 3 zeigen, daß sich die Öffnung 19 fast
über die gesamte Länge des Brennraumes erstreckt, so
daß hier keine besondere Erhöhung der Abgasgeschwindigkeit eintritt. Die in Fig. 2 und 4 erkennbaren Wandungen 26 verhindern ein Rückfließen der Abgase und
bewirken, daß die Abgase im Abgaszug 2o in Richtung

- 7 -

der Pfeile F 2 fließen.

In Fig. 1 ist erkennbar, daß die Wand 26 mit einer Schieberklappe 26a ausgerüstet ist, die über eine Betätigungsvorrichtung 26b geöffnet oder geschlossen werden kann. Hierdurch ist ein Kurzschluß zwischen der Öffnung 19 und dem Abgaskamin 5 unter Umgehung des Kanales 2o möglich, so daß dadurch beispielsweise beim Anheizen des Ofens ein sehr schnelles Abführen der Verbrennungsgase möglich ist.

Der Abgaszug 2o und damit der Wärmetauscher wird vom Brennraum 6 durch eine Doppelwand 22 getrennt, die auf diese Weise eine Lufteintrittskammer 23 schafft. Von hier fließt die Luft unter Umleitung um den Abgaszug 2o zur Warmluftkammer 24 und von dort zu einem in der Zeichnung nicht dargestellten Warmluftstutzen (Verbraucheranschluß).

In Fig. 2 und 4 ist der Weg der Abgase gestrichelt eingezeichnet, während in Fig. 1 und 3 der Weg der zu erhitzenden Gase eingezeichnet ist.

Der mittlere zylindrisch ausgebildete Brennraum 6 ruht mit seiner Wandung insbesondere im Bereich des vorderen Endes des Gebläses 2 auf einem entsprechenden

- 8 -

Gleitlager 25 auf, so daß aufgrund der Wärmedehnung Bewegungen dieses Zylinders möglich sind. In gleicher Weise sind die Luftzuführungsrohre 16, 17 und 18 in entsprechenden ringartigen Lagerungen 31 angeordnet, die es ermöglichen, daß sich die Rohre bei Wärmespannungen bewegen können und damit Vergrößerungen ihrer Länge oder Verkürzungen ihrer Länge frei folgen können, ohne daß dadurch die Wandungen des Ofens irgendwelchen Belastungen unterworfen werden.

Die der Nachverbrennung zugeführte Luft durch das Luftzuführungsrohr 18 ist, wie dies der Pfeil F in Fig. 4 zeigt, nach unten gerichtet, da sich herausgestellt hat, daß die wirksamste Führung der Luft in dieser Richtung erfolgen sollte.

Die Möglichkeit, bei Öffnen der Ofentür 1 die Luftzuführung zu unterbrechen, ist in Fig. 5 in größerem Maßstab dargestellt. In Fig. 5 ist dabei das Luftzuführungsrohr 16 erkennbar, das durch eine Verschlußklappe 32 verschlossen ist, die von einem Stößel 33 getragen wird, dessen vorderes freies Ende 34 im Bereich der Ofentür 1 angeordnet ist, wie dies auch in Fig. 1 erkennbar ist. Im verschlossenen Zustand (Fig. 3) drückt die Ofentür auf das freie Ende 34 des Stößels 33 und schiebt dadurch die Verschlußklappe 32 in die

- 9 -

in Fig. 5 dargestellte Stellung, und zwar gegen die
Wirkung einer Rückstellfeder 35. Die Verschlußklappe
33 ist auf dem Stößel aufgeschraubt und wird durch
eine Gegenmutter 36 gesichert. Hierdurch sind Anpassungen an unterschiedliche Rohrlängen, beispielsweise aufgrund von Fertigungstoleranzen, leicht auszugleichen.

Patentansprüche:

1. Warmluftofen für feste Brennstoffe mit einem Gebläse zur Erzielung eines Luftstromes, von dem ein Teil als Verbrennungsluft abgezweigt und einer langgestreckt ausgebildeten Brennkammer teilweise im Bereich des Rostes nach oben gerichtet und teilweise im oberen Bereich der Brennkammer zugeführt wird, während der Hauptteil die Brennkammer umfließt und derart erwärmt wird, gekennzeichnet durch eine horizontale Ausrichtung der langgestreckt ausgebildeten Brennkammer (6) und eine Zuführung (16, 17) der Verbrennungsluft im Bereich des Feuerrostes (7) über die ganze Länge desselben sowie eine auf den Rost (7) gerichtete Zuführung (18) der Verbrennungsluft im Bereich des oberen Teiles der Brennkammer (6).

2. Warmluftofen nach Anspruch 1, gekennzeichnet durch die Zuführung der Verbrennungsluft unmittelbar oberhalb des Feuerrostes (7).

3. Warmluftofen nach Anspruch 1, dadurch gekennzeichnet, daß die Luftzuführung im Bereich des Feuerrostes (7) unter den Rost (7) gerichtet erfolgt.

4. Warmluftofen nach Anspruch 1 bis 3, dadurch gekennzeichnet, daß sich der Abgaszug (2o) vom im oberen Teil des Ofens (3) liegenden Abgaseintritt bis zum unteren Teil des Ofens im Querschnitt vergrößert und von dort wieder im Querschnitt verringert.

5. Warmluftofen wenigstens nach Anspruch 1, dadurch gekennzeichnet, daß sich der Abgaseintritt (19) in den Abgaszug (2o) im wesentlichen über die gesamte Länge des Ofens (3) erstreckt.

6. Warmluftofen wenigstens nach Anspruch 1, dadurch gekennzeichnet, daß im Abgaszug (2o) ein Kurzschlußschieber (26a) vorgesehen ist.

7. Warmluftofen wenigstens nach Anspruch 1, dadurch gekennzeichnet, daß der Brennraum (6) und der Wärmetauscherraum nebeneinander angeordnet sind.

8. Warmluftofen wenigstens nach Anspruch 1, dadurch gekennzeichnet, daß der Wärmetauscherraum den Brennraum (6) konzentrisch umgibt.

9. Warmluftofen wenigstens nach Anspruch 1, dadurch gekennzeichnet, daß die Beschickung des Brenn-

- 3 -

raumes (6) an der der Luftzuführung (2) abgewandten Seite erfolgt.

10. Warmluftofen wenigstens nach Anspruch 8, <u>dadurch
    gekennzeichnet</u>, daß der Ofen zylinderförmig und
    einenendes gleitbar gelagert ist.

11. Warmluftofen wenigstens nach Anspruch 1, <u>dadurch
    gekennzeichnet</u>, daß die Luftsteuerung zum Brennraum thermostatisch erfolgt.

12. Warmluftofen wenigstens nach Anspruch 1, <u>dadurch
    gekennzeichnet</u>, daß bei Öffnen der Ofentür (1) die
    Luftzuführung automatisch unterbrochen wird.

13. Warmluftofen wenigstens nach Anspruch 1, <u>gekenn-
    zeichnet durch</u> mit Austrittsöffnungen (3o) ver-
    sehene, der Luftzuführung dienende Rohre (16, 17,
    18).

14. Warmluftofen nach Anspruch 12, <u>gekennzeichnet
    durch</u> an der Lufteintrittsseite der Rohre (16, 17,
    18) angeordnete Verschlußklappen (32), die jede
    mittels eines Stößels (33) durch Bewegen der
    Ofentür (1) betätigbar sind.

15. Warmluftofen wenigstens nach Anspruch 14, <u>dadurch gekennzeichnet</u>, daß die Stößel (33) gegen die Rückstellkraft einer Feder (35) beweglich sind.

16. Warmluftofen wenigstens nach Anspruch 12, <u>dadurch gekennzeichnet</u>, daß die Verschlußklappen (32) auf den Stößeln (33) einstellbar angeordnet sind.

17. Warmluftofen nach einem oder mehreren der vorhergehenden Ansprüche, <u>dadurch gekennzeichnet</u>, daß die Luftzuführungsrohre (16, 17, 18) an ringartigen Aufhängungen (31) verschieblich gelagert sind.

18. Warmluftofen nach einem oder mehreren der vorhergehenden Ansprüche, <u>gekennzeichnet durch</u> ein Fanggitter (37) im Abgaszug (20).

Fig. 1

Fig. 2

Fig. 3

Fig. 4

5

26

4

31 18

19

F

~6~

22

7

16 31 8 31 17

~20~

~23~

F F F

37

~21~

35

33 34

36 32 30

16

Fig. 5